# EUROPEAN PATENT SPECIFICATION

(11) **EP 3 076 745 B1**
(45) Date of publication and mention of the grant of the patent: **21.08.2019**
(21) Application number: 16156560.1
(22) Date of filing: 19.02.2016
(51) Int. Cl.: H04W 84/10, H04W 88/12

(54) **METHODS AND APPARATUSES FOR CONTROLLING WIRELESS ACCESS POINT**
VERFAHREN UND VORRICHTUNGEN ZUR STEUERUNG EINES DRAHTLOSZUGANGSPUNKTS
PROCÉDÉS ET APPAREIL DE COMMANDE DE POINTS D'ACCÈS SANS FIL

(30) Priority: 31.03.2015 CN 201510149483
(43) Date of publication of application: 05.10.2016
(73) Proprietor: Xiaomi Inc., Beijing 100085 (CN)
(72) Inventor: ZHANG, Yanlu, Haidian District Beijing 100085 (CN); YIN, Mingjun, Haidian District Beijing 100085 (CN); HOU, Enxing, Haidian District Beijing 100085 (CN)
(74) Representative: Robson, Aidan John

(56) References cited:
- EP-A1- 2 421 331
- US-A1- 2012 264 474
- US-A1- 2014 044 113
- US-A1- 2014 219 148

## Description

### TECHNICAL FIELD

The present disclosure relates to the field of smart devices, and more particularly, to methods and apparatuses for controlling a wireless access point.

### BACKGROUND

With the development of smart device technology, various kinds of smart devices have gradually become popular in people's lives. A smart device has a Wi-Fi (Wireless-Fidelity) chip built therein, through which the smart device can access a network. A user may use a smart terminal to send control instructions to smart devices that are associated with the smart terminal itself, so as to achieve remote control of household appliances.

Under normal circumstances, the smart device's Wi-Fi chip is set in a monitoring mode, and in such a case, the smart device can access to a network in the monitoring mode. In some special cases, for example, when the Wi-Fi chip encounters some problem so that the smart device cannot access to the network, it is necessary for the Wi-Fi chip to enable the function of wireless access point, thereby allowing the smart terminal to access to the network provided by the Wi-Fi chip, and to determine the cause of malfunction. The Wi-Fi chip enables the function of wireless access point in such a manner as: a user controls physical buttons or keys in the body of the smart device, so as to switch the operation mode of the Wi-Fi chip to a wireless access point mode. Such an agreement is discussed in US 2012/264474 A.

### SUMMARY

In order to solve the problem existing in the related art, embodiments of the present disclosure provide methods and apparatuses for controlling a wireless access point. The technical solutions are as follows.

According to a first aspect of embodiments of the present disclosure, there is provided a method for controlling a wireless access point, comprising in response to detecting that a control event for a smart device is triggered, acquiring (101, 302) a service set identifier SSID corresponding to the control event generating (102) a specified Wireless Fidelity Wi-Fi broadcast message according to the SSID corresponding to the control event; and broadcasting (103, 304) the specified Wi-Fi broadcast message, such that the smart device enables the wireless access point according to the Wi-Fi broadcast message.

Optionally, said generating a specified Wireless Fidelity Wi-Fi broadcast message according to the SSID corresponding to the control event includes:

in an SSID field of the specified Wi-Fi broadcast message, setting a content in the SSID field to the SSID corresponding to the control event.

Optionally, the specified Wi-Fi broadcast message is an association request message.

Optionally, prior to acquiring a service set identifier SSID corresponding to the control event, the method further includes:

if a specified operation is performed by a user in a control application, determining that a control event for a smart device being triggered is detected.

According to a second aspect of embodiments of the present disclosure, a method for controlling a wireless access point is provided, including:
receiving a specified Wi-Fi broadcast message, and acquiring a service set identifier SSID carried in the specified Wi-Fi broadcast message;
determining whether the SSID carried in the specified Wi-Fi broadcast message is the same as a specified SSID; and
if the SSID carried in the specified Wi-Fi broadcast message is the same as the specified SSID, enablingto enable a wireless access point.

According to a third aspect of embodiments of the present disclosure, an apparatus for controlling a wireless access point is provided, including:
a first acquiring module, configured to, in response to detecting that a control event for a smart device is triggered, acquire a service set identifier SSID corresponding to the control event;
a generating module, configured to generate a specified Wireless Fidelity Wi-Fi broadcast message according to the SSID corresponding to the control event; and
a sending module, configured to broadcast the specified Wi-Fi broadcast message, such that a further smart device enables its own wireless access point according to the Wi-Fi broadcast message.

Optionally, the generating module is further configured to:
in an SSID field of the specified Wi-Fi broadcast message, set a content in the SSID field to the SSID corresponding to the control event.

Optionally, the specified Wi-Fi broadcast message is an association request message.

Optionally, the apparatus further includes:
a first determining module, configured to, in response to detecting that a specified operation is performed by a user in a control application, determine that a control event for a smart device being triggered is detected.

According to a fourth aspect of embodiments of the present disclosure, an apparatus for controlling a wireless access point is provided, including:
a receiving module, configured to receive a specified Wi-Fi broadcast message;
a second acquiring module, configured to acquire a service set identifier SSID carried in the specified Wi-Fi broadcast message;
a second determining module, configured to determine whether the SSID carried in the specified Wi-Fi broadcast message is the same as a specified SSID; and
a control module, configured to, when the SSID carried in the specified Wi-Fi broadcast message is the same as the specified SSID, control to enable the wireless access point.

According to a fifth aspect of embodiments of the present disclosure, a terminal is provided, including:
a processor; and
a memory for storing instructions executable by the processor;
wherein the processor is configured to:
when detecting that a control event for a smart device is triggered, acquire a service set identifier SSID corresponding to the control event;
generate a specified Wireless Fidelity Wi-Fi broadcast message according to the SSID corresponding to the control event; and
broadcast the specified Wi-Fi broadcast message, such that a further smart device enables its own wireless access point according to the Wi-Fi broadcast message.

According to a sixth aspect of embodiments of the present disclosure, a smart device is provided, including:
a processor; and
a memory for storing instructions executable by the processor;
wherein the processor is configured to:
receive a specified Wi-Fi broadcast message, and acquire a service set identifier SSID carried in the specified Wi-Fi broadcast message;
determine whether the SSID carried in the specified Wi-Fi broadcast message is the same as a specified SSID; and
if the SSID carried in the specified Wi-Fi broadcast message is the same as the specified SSID, control a further smart device itself to enable its own wireless access point.

According to a seventh aspect of embodiments of the present disclosure, there is provided a computer program which, when being executed on a processor of a terminal, performs any one of the methods according to the first aspect of embodiments.

According to an eighth aspect of embodiments of the present disclosure, there is provided a computer program which, when being executed on a processor of a smart device, performs the method according to the second aspect of embodiments.

The technical solutions provided in the embodiments of the present disclosure may achieve the following beneficial effects.

When the control event for the smart device is triggered, the specified Wi-Fi broadcast message is generated according to the SSID corresponding to the control event, and the specified Wi-Fi broadcast message is broadcasted, such that the smart device which receives the specified Wi-Fi broadcast message enables its own wireless access point. As such, the operation process in which the smart device enables the wireless access point is simplified, and the use efficiency of the smart device is improved.

It shall be appreciated that the above general description and the detailed description hereinafter are only illustrative and interpretative, but not for limiting the present disclosure.

### BRIEF DESCRIPTION OF THE DRAWINGS

The accompanying drawings herein, which are incorporated into and constitute a part of the specification, illustrate embodiments consistent with the present disclosure, and together with the description, serve to explain the principles of the present disclosure.
FIG. 1 is a flowchart illustrating a method for controlling a wireless access point according to an exemplary embodiment;
FIG. 2 is a flowchart illustrating a method for controlling a wireless access point according to an exemplary embodiment;
FIG. 3 is a flowchart illustrating a method for controlling a wireless access point according to an exemplary embodiment;
FIG. 4 is a block diagram illustrating an apparatus for controlling a wireless access point according to an exemplary embodiment;
FIG. 5 is a block diagram illustrating an apparatus for controlling a wireless access point according to an exemplary embodiment;
FIG. 6 is a block diagram illustrating a terminal according to an exemplary embodiment; and
FIG. 7 is a block diagram illustrating a smart device according to an exemplary embodiment.

### DETAILED DESCRIPTION

In order to make the purposes, technical solutions and advantages of the present disclosure clearer, hereinafter, implementations of the present disclosure will be further described in detail with reference to the accompanying drawings.

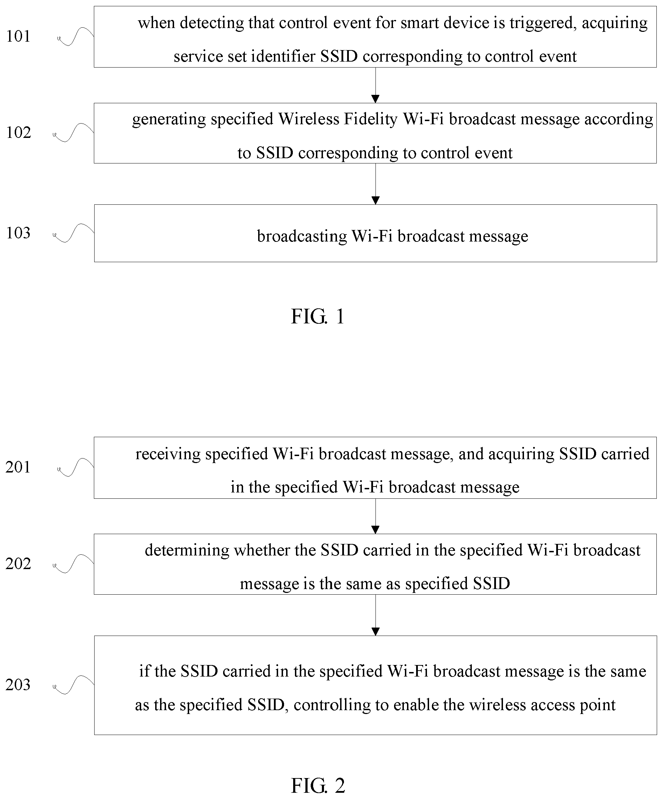

In an exemplary embodiment of the present disclosure, a method for controlling a wireless access point is provided. The method embodiment is applied in a terminal, which may be a mobile phone, a computer, a digital broadcast terminal, a messaging device, a gaming console, a tablet, a medical device, exercise equipment, a personal digital assistant, and the like. Referring to FIG. 1, the method includes the following steps.

In step 101, when it is detected that a control event for a smart device is triggered, a service set identifier SSID corresponding to the control event is acquired.

In step 102, a specified Wireless Fidelity Wi-Fi broadcast message is generated according to the SSID corresponding to the control event.

In step 103, the Wi-Fi broadcast message is broadcasted, such that the smart device enables the wireless access point according to the Wi-Fi broadcast message.

In the embodiment of the present disclosure, when the control event for the smart device is triggered, the specified Wi-Fi broadcast message is generated according to the SSID corresponding to the control event, and the specified Wi-Fi broadcast message is broadcasted, such that the smart device which receives the specified Wi-Fi broadcast message enables its own wireless access point. As such, the operation process in which the smart device enables the wireless access point is simplified, and the use efficiency of the smart device is improved.

In another exemplary embodiment of the present disclosure, a method for controlling a wireless access point is provided. The method embodiment is applied in a smart device, referring to FIG. 2. Optionally, the smart device may be a mobile phone, a computer, a digital broadcast terminal, a messaging device, a gaming console, a tablet, a medical device, exercise equipment, a personal digital assistant, and the like. Optionally, the smart device may also be a smart router, a smart air purifier, a smart water cleaner, a smart camera, and the like.

In step 201, a specified Wi-Fi broadcast message is received, and a service set identifier SSID carried in the specified Wi-Fi broadcast message is acquired.

In step 202, it is determined whether the SSID carried in the specified Wi-Fi broadcast message is the same as a specified SSID.

In step 203, if the SSID carried in the specified Wi-Fi broadcast message is the same as the specified SSID, it is controlled to enable the wireless access point.

In the embodiment of the present disclosure, when the specified Wi-Fi broadcast message is received, the smart device's own wireless access point is enabled. As such, the operation process in which the smart device enables the wireless access point is simplified, and the use efficiency of the smart device is improved.

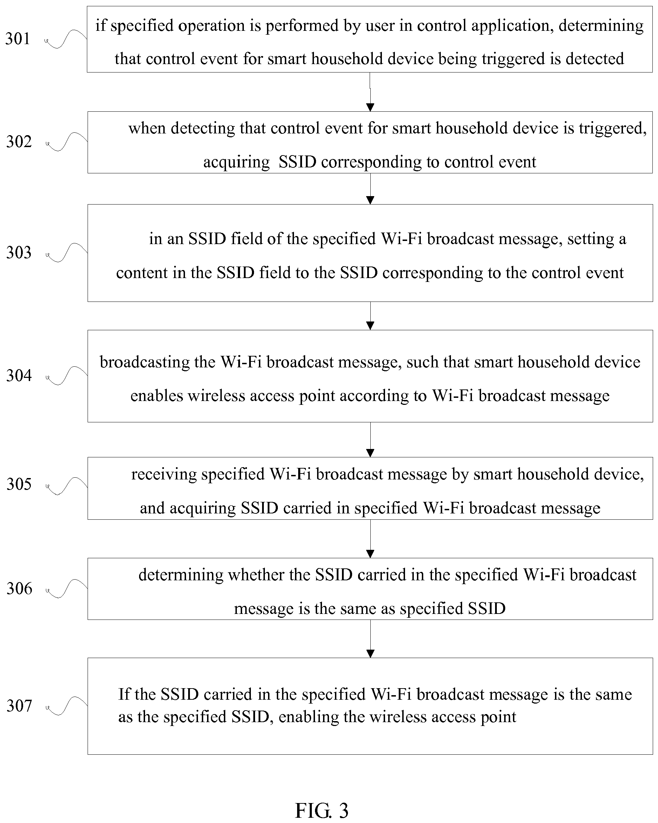

In still another exemplary embodiment of the present disclosure, a method for controlling a wireless access point is provided, referring to FIG. 3.

In step 301, if a terminal detects that a specified operation is performed by a user in a control application, it is determined to detect that a control event for a smart device is triggered.

The control application is preinstalled in the terminal, and the control application has a capability of invoking the Wi-Fi setting interface of the system, being capable of driving the terminal to send a specified Wi-Fi broadcast message.

When the user needs to control the smart device to enable the function of wireless access point, the user will need to activate the control application in the terminal, and perform a specified operation to trigger the terminal to perform a process of the present embodiment in which the terminal invokes the system interface and sends the specified Wi-Fi broadcast message.

The specified operation may include but not limited to operations such as clicking control buttons in the control application, and the like.

In step 302, when it is detected that a control event for a smart device is triggered, a service set identifier SSID corresponding to the control event is acquired.

The SSID corresponding to the control event is prestored in the control application. The SSID may be a content constituted by pure English characters, a content constituted by pure digital characters, or a content constituted by English characters mixed with digital characters. The SSID needs to be unique, so as to be distinguished from SSIDs provided by other network access devices.

In step 303, in an SSID field of the specified Wi-Fi broadcast message, the SSID corresponding to the control event is set as a content in the SSID field.

In the embodiment of the present disclosure, the specified Wi-Fi broadcast message may be an association request message, which allows a developer to modify the content in the SSID field.

Accordingly, the content in the SSID field of the message is replaced by the SSID corresponding to the control event. If the content in this field is null, the SSID corresponding to the control event is directly written into this field.

In step 304, the Wi-Fi broadcast message is broadcasted, such that the smart device enables the wireless access point according to the Wi-Fi broadcast message.

The sending process is to invoke a specified system interface to broadcast the message.

In step 305, the smart device receives a specified Wi-Fi broadcast message, and acquires a service set identifier SSID carried in the specified Wi-Fi broadcast message.

At this time, the Wi-Fi chip in the smart device is in a monitoring state, and may receive broadcast messages sent from other terminals or network access devices.

The process of acquiring the SSID carried in the message is to search the SSID field in the specified Wi-Fi broadcast message, and acquire the content in this field.

In step 306, it is determined whether the SSID carried in the specified Wi-Fi broadcast message is the same as a specified SSID.

The specified SSID is prestored in a storage space built in the smart device, so that the specified Wi-Fi broadcast message can be identified via the prestored specified SSID.

In step 307, if the SSID carried in the specified Wi-Fi broadcast message is the same as the specified SSID, the smart device itself is controlled to enable the wireless access point.

At this time, the smart device's own Wi-Fi chip is switched from a monitoring mode to a mode corresponding to the wireless access point.

In the embodiment of the present disclosure, when the control event for the smart device is triggered, the specified Wi-Fi broadcast message is generated according to the SSID corresponding to the control event, and the specified Wi-Fi broadcast message is broadcasted, such that the smart device which receives the specified Wi-Fi broadcast message enables its own wireless access point. As such, the operation process in which the smart device enables the wireless access point is simplified, and the use efficiency of the smart device is improved.

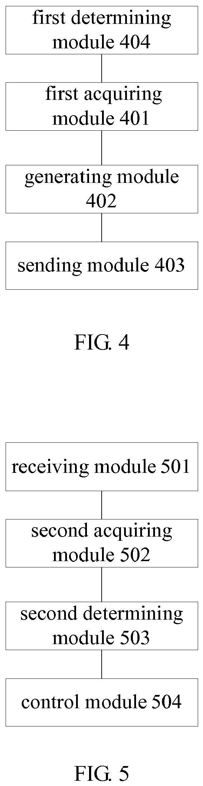

Corresponding to the method for controlling a wireless access point as provided by the above exemplary embodiment, another exemplary embodiment of the present disclosure provides an apparatus for controlling a wireless access point. Referring to FIG. 4, the apparatus includes:
a first acquiring module 401, configured to, when detecting that a control event for a smart device is triggered, acquire a service set identifier SSID corresponding to the control event;
a generating module 402, configured to generate a specified Wireless Fidelity Wi-Fi broadcast message according to the SSID corresponding to the control event; and
a sending module 403, configured to broadcast the specified Wi-Fi broadcast message, such that the smart device enables the wireless access point according to the Wi-Fi broadcast message.

The generating module 402 is further configured to:
in an SSID field of the specified Wi-Fi broadcast message, set a content in the SSID field to the SSID corresponding to the control event.

The specified Wi-Fi broadcast message is an association request message.

The apparatus further includes:
a first determining module 404, configured to, when a specified operation is performed by a user in a control application, determine that a control event for a smart device being triggered is detected.

In the embodiment of the present disclosure, when the control event for the smart device is triggered, the specified Wi-Fi broadcast message is generated according to the SSID corresponding to the control event, and the specified Wi-Fi broadcast message is broadcasted, such that the smart device which receives the specified Wi-Fi broadcast message enables its own wireless access point. As such, the operation process in which the smart device enables the wireless access point is simplified, and the use efficiency of the smart device is improved.

Corresponding to the method for controlling a wireless access point as provided by the above exemplary embodiment, another exemplary embodiment of the present disclosure provides an apparatus for controlling a wireless access point. Referring to FIG. 5, the apparatus includes:
a receiving module 501, configured to receive a specified Wi-Fi broadcast message;
a second acquiring module 502, configured to acquire a service set identifier SSID carried in the specified Wi-Fi broadcast message;
a second determining module 503, configured to determine whether the SSID carried in the specified Wi-Fi broadcast message is the same as a specified SSID; and
a control module 504, configured to, when the SSID carried in the specified Wi-Fi broadcast message is the same as the specified SSID, control to enable the wireless access point.

In the embodiment of the present disclosure, when the specified Wi-Fi broadcast message is received, the smart device's own wireless access point is enabled. As such, the operation process in which the smart device enables the wireless access point is simplified, and the use efficiency of the smart device is improved.

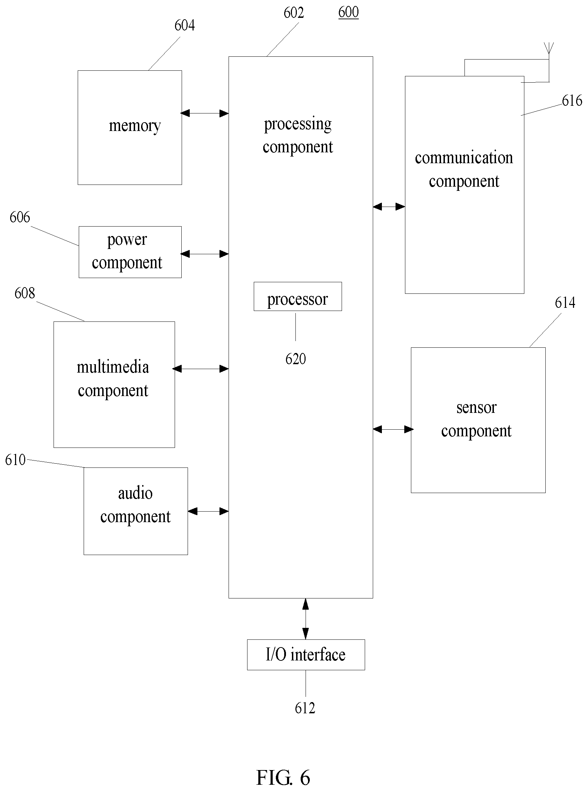

Corresponding to the apparatus for controlling a wireless access point as provided by the above exemplary embodiment, another exemplary embodiment of the present disclosure provides a terminal 600, referring to FIG. 6. For example, the terminal 600 may be a mobile phone, a computer, a digital broadcast terminal, a messaging device, a gaming console, a tablet, a medical device, exercise equipment, a personal digital assistant, and the like.

Referring to FIG. 6, the terminal 600 may include one or more of the following components: a processing component 602, a memory 604, a power component 606, a multimedia component 608, an audio component 610, an input/output (I/O) interface 612, a sensor component 614, and a communication component 616.

The processing component 602 typically controls overall operations of the terminal 600, such as the operations associated with display, telephone calls, data communications, camera operations, and recording operations. The processing component 602 may include one or more processors 620 to execute instructions to perform all or a part of the steps in the above-described methods. In addition, the processing component 602 may include one or more modules which facilitate the interaction between the processing component 602 and other components. For example, the processing component 602 may include a multimedia module to facilitate the interaction between the multimedia component 608 and the processing component 602.

The memory 604 is configured to store various types of data to support the operations of the terminal 600. Examples of such data include instructions for any application or method operated on the terminal 600, contact data, phonebook data, messages, pictures, videos, and the like. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the terminal 600. The power component 606 may include a power management system, one or more power supplies, and other components associated with the generation, management, and distribution of power in the terminal 600.

The multimedia component 608 includes a screen providing an output interface between the terminal 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 608 includes a front camera and/or a rear camera. The front camera and/or the rear camera may receive external multimedia data while the terminal 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone (MIC) configured to receive an external audio signal when the terminal 600 is in an operation mode, such as a call mode, a recording mode, or a voice recognition mode. The received audio signal may be further stored in the memory 604 or transmitted via the communication component 616. In some embodiments, the audio component 610 further includes a speaker to output audio signals.

The I/O interface 612 provides an interface between the processing component 602 and a peripheral interface module, such as a keyboard, a click wheel, a button, or the like. The buttons may include, but are not limited to, a home button, a volume button, a starting button, and a locking button.

The sensor component 614 includes one or more sensors to provide status assessments of various aspects of the terminal 600. For example, the sensor component 614 may detect an open/closed status of the terminal 600, relative positioning of components, e.g., the display and the keypad, of the terminal 600, a change in position of the terminal 600 or a component of the terminal 600, a presence or absence of user contact with the terminal 600, an orientation or an acceleration/deceleration of the terminal 600, and a change in temperature of the terminal 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate communications, wired or wirelessly, between the terminal 600 and other devices. The terminal 600 may access a wireless network based on a communication standard, such as WiFi, 2G, or 3G, or a combination thereof. In one exemplary embodiment, the communication component 616 receives a broadcast signal or broadcast associated information from an external broadcast management system via a broadcast channel. In one exemplary embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 604, executable by the processor 620 in the terminal 600, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

In the embodiment of the present disclosure, when the control event for the smart device is triggered, the specified Wi-Fi broadcast message is generated according to the SSID corresponding to the control event, and the specified Wi-Fi broadcast message is broadcasted, such that the smart device which receives the specified Wi-Fi broadcast message enables its own wireless access point. As such, the operation process in which the smart device enables the wireless access point is simplified, and the use efficiency of the smart device is improved.

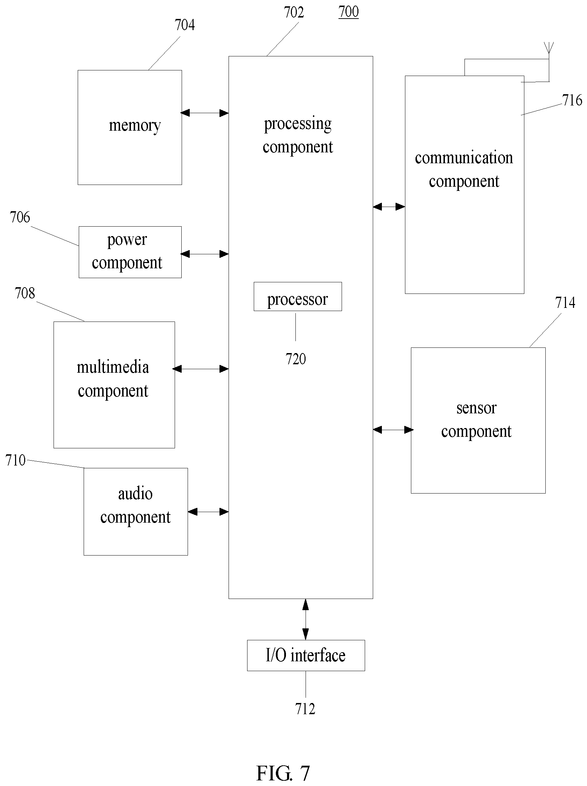

Corresponding to the apparatus for controlling a wireless access point as provided by the above exemplary embodiment, another exemplary embodiment of the present disclosure provides a smart device 700, referring to FIG. 7. For example, the smart device 700 may be a mobile phone, a computer, a digital broadcast terminal, a messaging device, a gaming console, a tablet, a medical device, exercise equipment, a personal digital assistant, a smart device, and the like. Optionally, the smart device 700 may also be a smart router, a smart air purifier, a smart water cleaner, a smart camera, and the like.

Referring to FIG. 7, the smart device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the smart device 700, such as the operations associated with display, telephone calls, data communications, camera operations, and recording operations. The processing component 702 may include one or more processors 720 to execute instructions to perform all or a part of the steps in the above-described methods. In addition, the processing component 702 may include one or more modules which facilitate the interaction between the processing component 702 and other components. For example, the processing component 702 may include a multimedia module to facilitate the interaction between the multimedia component 708 and the processing component 702.

The memory 704 is configured to store various types of data to support the operations of the smart device 700. Examples of such data include instructions for any application or method operated on the smart device 700, contact data, phonebook data, messages, pictures, videos, and the like. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the smart device 700. The power component 706 may include a power management system, one or more power supplies, and other components associated with the generation, management, and distribution of power in the smart device 700.

The multimedia component 708 includes a screen providing an output interface between the smart device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and/or the rear camera may receive external multimedia data while the smart device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the smart device 700 is in an operation mode, such as a call mode, a recording mode, or a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and a peripheral interface module, such as a keyboard, a click wheel, a button, or the like. The buttons may include, but are not limited to, a home button, a volume button, a starting button, and a locking button.

The sensor component 714 includes one or more sensors to provide status assessments of various aspects of the smart device 700. For example, the sensor component 714 may detect an open/closed status of the smart device 700, relative positioning of components, e.g., the display and the keypad, of the smart device 700, a change in position of the smart device 700 or a component of the smart device 700, a presence or absence of user contact with the smart device 700, an orientation or an acceleration/deceleration of the smart device 700, and a change in temperature of the smart device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communications, wired or wirelessly, between the smart device 700 and other devices. The smart device 700 may access a wireless network based on a communication standard, such as WiFi, 2G, or 3G, or a combination thereof. In one exemplary embodiment, the communication component 716 receives a broadcast signal or broadcast associated information from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the smart device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 704, executable by the processor 720 in the smart device 700, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

In the embodiment of the present disclosure, when the specified Wi-Fi broadcast message is received, the smart device's own wireless access point is enabled. As such, the operation process in which the smart device enables the wireless access point is simplified, and the use efficiency of the smart device is improved.

Other embodiments of the present disclosure will be apparent to those skilled in the art from consideration of the specification and practice disclosed herein. This application is intended to cover any variations, uses, or adaptations of the present disclosure following the general principles thereof and including such departures from the present disclosure as coming within common knowledge or customary technical means in the art. It is intended that the specification and embodiments be considered as exemplary only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. A method for controlling a wireless access point, comprising:
in response to detecting that a control event for a smart device is triggered, acquiring (101, 302) a service set identifier SSID corresponding to the control event;
generating (102) a specified Wireless Fidelity Wi-Fi broadcast message according to the SSID corresponding to the control event; and
broadcasting (103, 304) the specified Wi-Fi broadcast message; and
receiving at a further smart device the specified Wi-Fi broadcast message, wherein the further smart device is configured to enable its own wireless access point according to the Wi-Fi broadcast message.

2. The method according to claim 1, **characterized in that** said generating (102) a specified Wireless Fidelity Wi-Fi broadcast message according to the SSID corresponding to the control event comprises:
in an SSID field of the specified Wi-Fi broadcast message, setting (303) a content in the SSID field to the SSID corresponding to the control event.

3. The method according to claim 1 or 2, **characterized in that** the specified Wi-Fi broadcast message is an association request message.

4. The method according to claim 1, 2 or 3, **characterized in that** prior to acquiring (101) a service set identifier SSID corresponding to the control event, the method further comprises:
if a specified operation is performed by a user in a control application, determining (301) that a control event for a smart device being triggered is detected.

5. A method for controlling a wireless access point, comprising:
receiving (201, 305) a specified Wi-Fi broadcast message, and acquiring a service set identifier SSID carried in the specified Wi-Fi broadcast message;
determining (202, 306) whether the SSID carried in the specified Wi-Fi broadcast message is the same as a specified SSID; and
if the SSID carried in the specified Wi-Fi broadcast message is the same as the specified SSID, enabling (203, 307) a wireless access point.

6. An apparatus for controlling a wireless access point, comprising:
a first acquiring module (401), configured to, in response to detecting that a control event for a smart device is triggered, acquire a service set identifier SSID corresponding to the control event;
a generating module (402), configured to generate a specified Wireless Fidelity Wi-Fi broadcast message according to the SSID corresponding to the control event; and
a sending module (403), configured to broadcast the specified Wi-Fi broadcast message, such that a further smart device enables its own wireless access point according to the Wi-Fi broadcast message.

7. The apparatus according to claim 6, **characterized in that** the generating module (402) is further configured to:
in an SSID field of the specified Wi-Fi broadcast message, set a content in the SSID field to the SSID corresponding to the control event.

8. The apparatus according to claim 6 or 7, **characterized in that** the specified Wi-Fi broadcast message is an association request message.

9. The apparatus according to claim 6, **characterized in that** the apparatus further comprises:
a first determining module (404), configured to, in response to detecting that a specified operation is performed by a user in a control application, determine that a control event for a smart device being triggered is detected.

10. An apparatus for controlling a wireless access point, comprising:
a receiving module (501), configured to receive a specified Wi-Fi broadcast message;
a second acquiring module (502), configured to acquire a service set identifier SSID carried in the specified Wi-Fi broadcast message;
a second determining module (503), configured to determine whether the SSID carried in the specified Wi-Fi broadcast message is the same as a specified SSID; and
a control module (504), configured to, when the SSID carried in the specified Wi-Fi broadcast message is the same as the specified SSID, control to enable the wireless access point.

11. A terminal, comprising:
a processor (620); and
a memory (604) for storing instructions executable by the processor (620);
wherein the processor (620) is configured to; execute the stored instructions to perform the steps of any of claims 1 to 4.

12. A smart device, comprising:
a processor (720); and
a memory (704) for storing instructions executable by the processor (720);
wherein the processor (720) is configured to execute the sotred instructions to perform the steps of claim 5.

13. A computer program which, when being executed on a processor of a terminal, performs a method according to any one of claims 1 to 4.

14. A computer program which, when being executed on a processor of a smart device, performs a method according to claim 5.

## Patentansprüche

1. Verfahren zum Bedienen eines funkgestützten Zugangspunkts, das Folgendes aufweist:
als Reaktion auf das Erkennen, dass ein Bedienereignis für ein Smart-Gerät ausgelöst wird, Erfassen (101, 302) eines dem Bedienereignis entsprechenden Service Set Identifier, SSID;
Generieren (102) einer vorgegebenen Wireless Fidelity-, WiFi, -Übermittlungsnachricht gemäß dem dem Bedienereignis entsprechenden SSID; und
Übermitteln (103, 304) der vorgegebenen WiFi-Übermittlungsnachricht; und
Empfangen der vorgegebenen WiFi-Übermittlungsnachricht an einem weiteren Smart-Gerät, wobei das weitere Smart-Gerät zum Aktivieren seines eigenen funkgestützten Zugangspunkts gemäß der WiFi-Übermittlungsnachricht konfiguriert ist.

2. Verfahren nach Anspruch 1, **dadurch gekennzeichnet, dass** das genannte Generieren (102) einer vorgegebenen Wireless Fidelity-, WiFi, -Übermittlungsnachricht gemäß dem dem Bedienereignis entsprechenden SSID Folgendes aufweist:
in einem SSID-Feld der vorgegebenen WiFi-Übermittlungsnachricht Einstellen (303) eines Inhalts im SSID-Feld auf die dem Bedienereignis entsprechende SSID.

3. Verfahren nach Anspruch 1 oder 2, **dadurch gekennzeichnet, dass** die vorgegebene WiFi-Übermittlungsnachricht eine Zuordnungsanforderungsnachricht ist.

4. Verfahren nach Anspruch 1, 2 oder 3, **dadurch gekennzeichnet, dass** das Verfahren vor dem Erfassen (101) eines dem Bedienereignis entsprechenden Service Set Identifier (SSID) ferner Folgendes aufweist:
falls durch einen Benutzer ein vorgegebener Vorgang in einer Bedienanwendung durchgeführt wird, Ermitteln (301), dass erkannt wird, dass ein Bedienereignis für ein Smart-Gerät ausgelöst wird.

5. Verfahren zum Bedienen eines funkgestützten Zugangspunkts, das Folgendes aufweist:
Empfangen (201, 305) einer vorgegebenen WiFi-Übermittlungsnachricht und Erfassen eines Service Set Identifier, SSID, der in der vorgegebenen WiFi-Übermittlungsnachricht getragen wird;
Ermitteln (202, 306), ob die in der vorgegebenen WiFi-Übermittlungsnachricht getragene SSID die gleiche wie eine vorgegebene SSID ist; und
falls die in der vorgegebenen WiFi-Übermittlungsnachricht getragene SSID die gleiche wie die vorgegebene SSID ist, Aktivieren (203, 307) eines funkgestützten Zugangspunkts.

6. Vorrichtung zum Bedienen eines funkgestützten Zugangspunkts, die Folgendes aufweist:
ein erstes Erfassungsmodul (401), das zum Erfassen, als Reaktion auf das Erkennen, dass ein Bedienereignis für ein Smart-Gerät ausgelöst wird, eines dem Bedienereignis entsprechenden Service Set Identifier, SSID, konfiguriert ist;
ein Generierungsmodul (402), das zum Generieren einer vorgegebenen Wireless Fidelity-, WiFi, -Übermittlungsnachricht gemäß dem dem Bedienereignis entsprechenden SSID konfiguriert ist; und
ein Sendemodul (403), das zum Übermitteln der vorgegebenen WiFi-Übermittlungsnachricht, so dass ein weiteres Smart-Gerät seinen eigenen funkgestützten Zugangspunkt gemäß der WiFi-Übermittlungsnachricht aktiviert, konfiguriert ist.

7. Vorrichtung nach Anspruch 6, **dadurch gekennzeichnet, dass** das Generierungsmodul (402) ferner konfiguriert ist zum:
in einem SSID-Feld der vorgegebenen WiFi-Übermittlungsnachricht Einstellen eines Inhalts im SSID-Feld auf die dem Bedienereignis entsprechende SSID.

8. Vorrichtung nach Anspruch 6 oder 7, **dadurch gekennzeichnet, dass** die vorgegebene WiFi-Übermittlungsnachricht eine Zuordnungsanforderungsnachricht ist.

9. Vorrichtung nach Anspruch 6, **dadurch gekennzeichnet, dass** die Vorrichtung ferner Folgendes aufweist:
ein erstes Ermittlungsmodul (404), das zum Ermitteln, dass erkannt wird, dass ein Bedienereignis für ein Smart-Gerät ausgelöst wird, als Reaktion auf das Erkennen, dass durch einen Benutzer ein vorgegebener Vorgang in einer Bedienanwendung durchgeführt wird, konfiguriert ist.

10. Vorrichtung zum Bedienen eines funkgestützten Zugangspunkts, die Folgendes aufweist:
ein Empfangsmodul (501), das zum Empfangen einer vorgegebenen WiFi-Übermittlungsnachricht konfiguriert ist;
ein zweites Erfassungsmodul (502), das zum Erfassen eines in der vorgegebenen WiFi-Übermittlungsnachricht getragenen Service Set Identifier, SSID, konfiguriert ist;
ein zweites Ermittlungsmodul (503), das zum Ermitteln, ob die in der vorgegebenen WiFi-Übermittlungsnachricht getragene SSID die gleiche wie eine vorgegebene SSID ist, konfiguriert ist; und
ein Bedienmodul (504), das zum Bedienen zur Aktivierung des funkgestützten Zugangspunkts, wenn die in der vorgegebenen WiFi-Übermittlungsnachricht getragene SSID die gleiche wie die vorgegebene SSID ist, konfiguriert ist.

11. Endgerät, das Folgendes aufweist:
einen Prozessor (620); und
einen Speicher (604) zum Speichern von durch den Prozessor (620) ausführbaren Anweisungen;
wobei der Prozessor (620) zum Ausführen der gespeicherten Anweisungen zum Durchführen der Schritte nach einem der Ansprüche 1 bis 4 konfiguriert ist.

12. Smart-Gerät, das Folgendes aufweist:
einen Prozessor (720); und
einen Speicher (704) zum Speichern von durch den Prozessor (720) ausführbaren Anweisungen;
wobei der Prozessor (720) zum Ausführen der gespeicherten Anweisungen zum Durchführen der Schritte von Anspruch 5 konfiguriert ist.

13. Computerprogramm, das bei Ausführung auf einem Prozessor eines Endgeräts ein Verfahren nach einem der Ansprüche 1 bis 4 durchführt.

14. Computerprogramm, das bei Ausführung auf einem Prozessor eines Smart-Geräts ein Verfahren nach Anspruch 5 durchführt.

## Revendications

1. Procédé de commande d'un point d'accès sans fil, comprenant :
en réponse à la détection qu'un événement de commande d'un dispositif intelligent est déclenché, l'acquisition (101, 302) d'un identifiant d'ensemble de services SSID correspondant à l'événement de commande ;
la génération (102) d'un message de diffusion de fidélité sans fil Wi-Fi spécifié conformément au SSID correspondant à l'événement de commande ; et
la diffusion (103, 304) du message de diffusion Wi-Fi spécifié ; et
la réception au niveau d'un autre dispositif intelligent du message de diffusion Wi-Fi spécifié, l'autre dispositif intelligent étant configuré pour activer son propre point d'accès sans fil conformément au message Wi-Fi.

2. Procédé selon la revendication 1, **caractérisé en ce que** ladite génération (102) d'un message de diffusion de fidélité sans fil Wi-Fi spécifié conformément au SSID correspondant à l'événement de commande comprend :
dans un champ SSID du message de diffusion Wi-Fi spécifié, l'établissement (303) d'un contenu dans le champ SSID relativement au SSID correspondant à l'événement de commande.

3. Procédé selon la revendication 1 ou 2, **caractérisé en ce que** le message de diffusion Wi-Fi spécifié est un message de demande d'association.

4. Procédé selon la revendication 1, 2 ou 3, le procédé comprenant en outre, avant l'acquisition (101) d'un identifiant d'ensemble de services SSID correspondant à l'événement de commande :
si une opération spécifiée est réalisée par un utilisateur dans une application de commande, la détermination (301) qu'un événement de commande d'un dispositif intelligent déclenché est détecté.

5. Procédé de commande d'un point d'accès sans fil, comprenant :
la réception (201, 305) d'un message de diffusion Wi-Fi spécifié, et l'acquisition d'un identifiant de services sans fil SSID inclus dans le message de diffusion Wi-Fi spécifié ;
la détermination (202, 306) que le SSID inclus dans le message de diffusion Wi-Fi spécifié est identique ou non à un SSID spécifié ; et
si le SSID inclus dans le message de diffusion Wi-Fi spécifié est identique au SSID spécifié, l'activation (203, 307) d'un point d'accès sans fil.

6. Appareil de commande d'un point d'accès sans fil, comprenant :
un premier module d'acquisition (401), configuré pour, en réponse à la détection qu'un événement de commande d'un dispositif intelligent est déclenché, acquérir un identifiant de services sans fil SSID correspondant à l'événement de commande ;
un module de génération (402), configuré pour générer un message de diffusion de fidélité sans fil Wi-Fi spécifié conformément au SSID correspondant à l'événement de commande ; et
un module d'envoi (403), configuré pour diffuser le message de diffusion Wi-Fi spécifié, de telle sorte qu'un autre dispositif intelligent active son propre point d'accès sans fil conformément au message de diffusion Wi-Fi.

7. Appareil selon la revendication 6, **caractérisé en ce que** le module de génération (402) est configuré en outre pour :
dans un champ SSID du message de diffusion Wi-Fi spécifié, établir un contenu dans le champ SSID relativement au SSID correspondant à l'événement de commande.

8. Appareil selon la revendication 6 ou 7, **caractérisé en ce que** le message de diffusion Wi-Fi spécifié est un message de demande d'association.

9. Appareil selon la revendication 6, **caractérisé en ce que** l'appareil comprend en outre :
un premier module de détermination (404), configuré pour, en réponse à la détection qu'une opération spécifiée est réalisée par un utilisateur dans une application de commande, déterminer qu'un événement de commande d'un dispositif intelligent déclenché est détecté.

10. Appareil de commande d'un point d'accès sans fil, comprenant :
un module de réception (501), configuré pour recevoir un message de diffusion Wi-Fi spécifié ;
un second module d'acquisition (502), configuré pour acquérir un identifiant de services sans fil SSID inclus dans le message de diffusion Wi-Fi spécifié ;
un second module de détermination (503), configuré pour déterminer que le SSID inclus dans le message de diffusion Wi-Fi spécifié est identique ou non à un SSID spécifié ; et
un module de commande (504), configuré pour, quand le SSID inclus dans le message de diffusion Wi-Fi spécifié est identique au SSID spécifié, commander l'activation du point d'accès sans fil.

11. Terminal, comprenant :
un processeur (620) ; et
une mémoire (604) destinée à mémoriser des instructions exécutables par le processeur (620) ;
dans lequel le processeur (620) est configuré pour exécuter les instructions mémorisées afin de réaliser les étapes selon l'une quelconque des revendications 1 à 4.

12. Dispositif intelligent, comprenant :
un processeur (720) ; et
une mémoire (704) destinée à mémoriser des instructions exécutables par le processeur (720) ;
dans lequel le processeur (720) est configuré pour exécuter les instructions mémorisées afin de réaliser les étapes de la revendication 5.

13. Programme informatique qui, à son exécution sur un processeur d'un terminal, réalise un procédé selon l'une quelconque des revendications 1 à 4.

14. Programme informatique qui, à son exécution sur un processeur d'un dispositif intelligent, réalise un procédé selon la revendication 5.
